Europäisches Patentamt

European Patent Office

Office européen des brevets

(19)

(11) Veröffentlichungsnummer: **0 253 137 B1**

(12) **EUROPÄISCHE PATENTSCHRIFT**

(45) Veröffentlichungstag der Patentschrift: **20.05.92**

(51) Int. Cl.5: **C01B 17/90**, C01B 7/07, C01B 25/234

(21) Anmeldenummer: **87108529.6**

(22) Anmeldetag: **12.06.87**

(54) **Verfahren zur Oxidation von in Phosphorsäure enthaltenem Schwefelwasserstoff.**

(30) Priorität: **09.07.86 DE 3623134**

(43) Veröffentlichungstag der Anmeldung:
**20.01.88 Patentblatt 88/03**

(45) Bekanntmachung des Hinweises auf die Patenterteilung:
**20.05.92 Patentblatt 92/21**

(84) Benannte Vertragsstaaten:
**BE DE ES FR GB NL**

(56) Entgegenhaltungen:
**EP-A- 0 027 607**
**DE-A- 2 700 450**
**DE-C- 1 124 024**

(73) Patentinhaber: **HOECHST AKTIENGESELL-SCHAFT**
**Postfach 80 03 20**
**W-6230 Frankfurt am Main 80(DE)**

(72) Erfinder: **Schrödter, Klaus, Dr.**
**Baadenbergerstrasse 18**
**W-5000 Köln(DE)**
Erfinder: **Kolkmann, Friedrich, Dr.**
**Tiergartenstrasse 22 e**
**W-5040 Brühl(DE)**

**Beschreibung**

Die vorliegende Erfindung betrifft ein Verfahren zur Oxidation von in Phosphorsäure enthaltenem Schwefelwasserstoff mit Hilfe von Wasserstoffperoxid.

Es ist bekannt, Schwefelwasserstoff in neutraler oder alkalischer Lösung mit Wasserstoffperoxid unter Bildung von Sulfat- und Thiosulfat-Ionen umzusetzen (vergl. KIRKOTHMER: "Encyclopedia of Chemical Technology", 3. Auflage, Band 22, 1983, Seite 116). Weiterhin ist bekannt, daß in Mineralsäuren wie Salzsäure, Schwefelsäure oder Phosphorsäure das Oxidationsverhalten von Wasserstoffperoxid gegenüber Schwefelwasserstoff uneinheitlich ist; in Abhängigkeit von der Säure und ihrer Konzentration läuft die Reaktion unvollständig, mit geringer Reaktionsgeschwindigkeit oder gar nicht ab (vergl. "Gmelins Handbuch der Anorganischen Chemie", 8. Auflage, System-Nummer 9, "Schwefel", Teil B, Lieferung 1, 1953, Seite 94; VDI-Richtlinie Nr. 3486, Blatt 1, 1979, Seite 3)

Weiterhin gibt es auch die Möglichkeit, in Mineralsäuren enthaltenen Schwefelwasserstoff durch Eindampfen der Mineralsäure oder durch Ausblasen mit Luft zu entfernen (vergl. WINNACKER-KÜCHLER: "Chemische Technologie", Band 2, Anorganische Technologie I, 4. Auflage, 1982, Seite 219; "Ullmanns Encyklopädie der technischen Chemie", 4. Auflage, Band 18, 1979, Seite 312). Dabei fallen jedoch schwefelwasserstoffhaltige Brüden und Abgase an, welche zur Reinigung aufgearbeitet werden müssen.

Schließlich wird beim Verfahren zur Herstellung einer oxidationsbeständigen anorganischen Säure nach der EP-A-27 607 die Säure zur Oxidation der in ihr enthaltenen organischen Verunreinigungen in Gegenwart von 0,1 bis 100 mg, bezogen auf die Säuremenge, einer wasserlöslichen Vanadium-Verbindung mit 35 %iger wäßriger Wasserstoffperoxidlösung umgesetzt.

Es ist Aufgabe der vorliegenden Erfindung, ein Verfahren zur Oxidation von in Phosphorsäure enthaltenem Schwefelwasserstoff mit Hilfe von Wasserstoffperoxid anzugeben, bei welchem der Schwefelwasserstoff in kurzen Reaktionszeiten quantitativ und unabhängig von der Konzentration der Phosphorsäure oxidiert und die Phosphorsäure damit von ihm befreit wird. Das wird erfindungsgemäß dadurch erreicht, daß man in der Phosphorsäure einen Vanadiumgehalt von 10 bis 200 ppm einstellt, daß man der Phosphorsäure 5 bis 20 Mol Wasserstoffperoxid pro Mol Schwefelwasserstoff hinzufügt und daß man die Reaktionsmischung unter Rühren 10 bis 30 Minuten verweilen läßt.

Beim erfindungsgemäßen Verfahren entstehen als Oxidationsprodukte des Sulfidions Sulfationen und elementarer Schwefel. Obwohl der Schwefel in feinteiliger Form anfällt, kann er in bekannter Weise durch Druck- oder Saugfiltration von der Phosphorsäure abgetrennt werden.

Das Verfahren gemäß der Erfindung läuft bereits bei Raumtemperatur mit hinreichender Geschwindigkeit ab; es ist jedoch vorteilhaft, das Verfahren bei Temperaturen von 30 bis 60°C durchzuführen.

Beispiel 1 (Vergleichsbeispiel)

In chemisch reine Phosphorsäure (40 % $H_3PO_4$) mit einem Sulfid-Gehalt von 350 ppm wurden bei Raumtemperatur 6 Mol $H_2O_2$ je Mol Sulfid unter Rühren eingetragen. Das Rühren wurde 20 Minuten fortgesetzt. Danach waren 21 % des in der Phosphorsäure enthalten Schwefelwasserstoffes oxidiert.

Beispiel 2 (gemäß der Erfindung)

Beispiel 1 wurde mit der Änderung wiederholt, daß in der Phosphorsäure vor der $H_2O_2$-Zugabe ein Vanadiumgehalt von 10 ppm eingestellt wurde. Nach einer Reaktionszeit von 15 Minuten war die Phosphorsäure geruchsfrei. Eine Analyse auf Sulfid bestätigte die 100 %ige Sulfidoxidation.

Beispiel 3 (gemäß der Erfindung)

Naßphosphorsäure (40 96 $H_3PO_4$) mit einem Sulfid-Gehalt von 630 ppm und einem Vanadiumgehalt von 100 ppm wurde bei 40°C mit 10 Mol $H_2O_2$ je Mol Sulfid versetzt und 20 Minuten gerührt. 100 % des in der Naßphosphorsäure enthaltenen Schwefelwasserstoffes waren oxidiert.

Beispiel 4 (gemäß der Erfindung)

Naßphosphorsäure (70 96 $H_3PO_4$) mit einem Sulfid-Gehalt von 85 ppm und einem Vanadiumgehalt von 30 ppm wurde mit 8 Mol $H_2O_2$ je Mol Sulfid versetzt und 15 Minuten bei 60°C gerührt. Danach waren 100 % des in der Naßphosphorsäure enthaltenen Schwefelwasserstoffes oxidiert.

T A B E L L E

| Beispiel Nr. | Säure Art | Konzentration (%) | Gehalt an | | Zusatz von $H_2O_2$ (Mol/Mol $S^{2-}$) | $S^{2-}$-Oxidation (%) |
| | | | Sulfid (ppm) | Vanadium (ppm) | | |
|---|---|---|---|---|---|---|
| 1 | Phosphorsäure (chem. rein) | 40 | 350 | 0 | 6 | 21 |
| 2 | Phosphorsäure (chem. rein) | 40 | 350 | 10 | 6 | 100 |
| 3 | Naßphosphorsäure | 40 | 630 | 100 | 10 | 100 |
| 4 | Naßphosphorsäure | 70 | 85 | 30 | 8 | 100 |

# EP 0 253 137 B1

**Patentansprüche**

1. Verfahren zur katalytischen Oxidation von in Phosphorsäure enthaltenem Schwefelwasserstoff mit Hilfe von Wasserstoffperoxid, dadurch gekennzeichnet, daß man in der Phosphorsäure einen Vanadiumgehalt von 10 bis 200 ppm einstellt, daß man der Phosphorsäure 5 bis 20 Mol Wasserstoffperoxid pro Mol Schwefelwasserstoff hinzufügt und daß man die Reaktionsmischung unter Rühren 10 bis 30 Minuten verweilen läßt.

**Claims**

1. A process for the catalytic oxidation of hydrogen sulfide present in phosphoric acid with the aid of hydrogen peroxide, which comprises adjusting the vanadium content in the phosphoric acid from 10 to 200 ppm, adding from 5 to 20 mol of hydrogen peroxide, per mole of hydrogen sulfide, to the phosphoric acid, and stirring the reaction mixture for from 10 to 30 minutes.

**Revendications**

1. Procédé pour l'oxydation catalytique du sulfure d'hydrogène contenu dans l'acide phosphorique à l'aide de peroxyde d'hydrogène, caractérisé en ce que l'on ajuste dans l'acide phosphorique une teneur en vanadium de 10 à 200 ppm, en ce que l'on ajoute à l'acide phosphorique 5 à 20 mol de peroxyde d'hydrogène par mol de sulfure d'hydrogène et en ce que l'on agite le mélange de réaction pendant 10 à 30 min.

4